# EUROPEAN PATENT SPECIFICATION

(11) **EP 2 300 707 B1**
(45) Date of publication and mention of the grant of the patent: **10.02.2016**
(21) Application number: 09750824.6
(22) Date of filing: 13.05.2009
(51) Int. Cl.: F03B 13/18

(54) **WAVE ENERGY GENERATION SYSTEM**
WELLENENERGIEERZEUGUNGSSYSTEM
SYSTÈME HOULOMOTEUR DE GÉNÉRATION D' ÉNERGIE

(30) Priority: 22.05.2008 NO 20082318
(43) Date of publication of application: 30.03.2011
(73) Proprietor: Andresen, Johan F., 4009 Stavanger (NO); Knutsen, Hans, 4270 Åkrehamn (NO)
(72) Inventor: Andresen, Johan F., 4009 Stavanger (NO); Knutsen, Hans, 4270 Åkrehamn (NO)
(74) Representative: Onsagers AS
(86) International application number: PCT/NO2009/000180
(87) International publication number: WO 2009/142504

(56) References cited:
- WO-A-01/73289
- WO-A-2005/038246
- GB-A- 2 425 154
- US-A- 4 235 693
- US-A- 5 986 349

## Description

### FIELD OF THE INVENTION

The present invention relates to a wave energy generation system.

### BACKGROUND OF THE INVENTION

Several types of wave energy generation systems are known for generating electric energy from waves. There are a lot of technical challenges involved with such systems. First of all, they should be located in waters where there are a lot of waves during long periods of the year to increase energy production. However, the construction must not only work during the average wave heights, the construction must also withstand the forces from maximal wave heights occurring during winter storms etc. There have been several examples of wave energy generation systems that have been destroyed by such storms.

US 5 986349 is considered as the closest prior art to the subject-matter of claim 1.

The object of the present invention is to provide a robust and reliable wave energy generation system. Moreover, the object is to provide as many movable parts as possible above the sea level for access with respect to maintenance, replacements of parts and components if necessary etc.

### SUMMARY OF THE INVENTION

The present invention relates to wave energy generation system for generating electric energy from waves, comprising a base structure and a floating structure, where the floating structure is movable in relation to the base structure when influenced by waves, wherein:
- the base structure comprises a substantially vertical post;
- the floating structure comprises a housing with a central opening, where the floating structure is provided substantially around the vertical post;
- the floating structure is movably connected to the post by means of primary hydraulic cylinder devices, where the primary hydraulic cylinder devices are hydraulically connected to an energy converting device for converting hydraulic energy in the fluid flow caused by wave movements to electric energy;
- secondary hydraulic cylinder devices are provided in the central opening between the post and the housing to maintain a distance between the housing and the post.

In an aspect of the invention, the base structure is anchored to the seabed.

In an aspect of the invention, the base structure comprises a substantially flat, cylindrical body, where the post is protruding upwardly from the body.

In an aspect of the invention, the base structure comprises a longitudinal channel for an electric cable electrically connected to the energy converting device.

In an aspect of the invention, the floating structure comprises a lower compartment wherein bidirectional pumps are provided for pumping seawater into or out from the lower compartment for ballasting the floating structure.

In an aspect of the invention, the primary hydraulic cylinder devices are connected to the base structure by means of a connection device provided in the top end of the post.

In an aspect of the invention, the connection device is vertically movable in relation to the top end of the post by means of vertical hydraulic cylinder devices.

In an aspect of the invention, the energy converting device comprises a hydraulic accumulator device for accumulating hydraulic fluid, a generator device for generating electric energy from the flowing hydraulic fluid and electric circuitry electrically connected to the generator device, where the electric energy is converted to a suitable voltage/current level for transfer to a distribution system or load.

In an aspect of the invention, the electric circuitry is connected to an electric cable.

In an aspect of the invention, the hydraulic accumulator device is hydraulically connected to the primary hydraulic cylinder devices, secondary hydraulic cylinder devices and/or the vertical hydraulic cylinder devices.

In an aspect of the invention, the energy converting device is provided in upper and/or intermediate compartments of the floating structure.

In an aspect of the invention, the system further comprises a control system for controlling the operation of the system according to weather conditions, security requirements etc.

In an aspect of the invention, the control system controls the hydraulic counter pressure in the primary hydraulic cylinder devices, secondary hydraulic cylinder devices and/or the vertical hydraulic cylinder devices to prevent that the they reach their maximum retracted and/or expanded positions.

In an aspect of the invention, the housing is substantially cylindrical.

### DETAILED DESCRIPTION

In the following, a detailed description of an embodiment according to the invention will be described with reference to the enclosed drawings, where:
Fig. 1 shows an embodiment of the wave energy generation system;
Fig. 2 shows a cross section of the system in fig. 1;
Fig. 3 - 5 illustrates the different positions of the floating structure in relation to the base structure in fig. 1 and 2.

The embodiment of the wave energy generation system 1 comprises a base structure 2 and a floating structure 3, where the floating structure 3 is movable in relation to the base structure 2 as will be described in detail below.

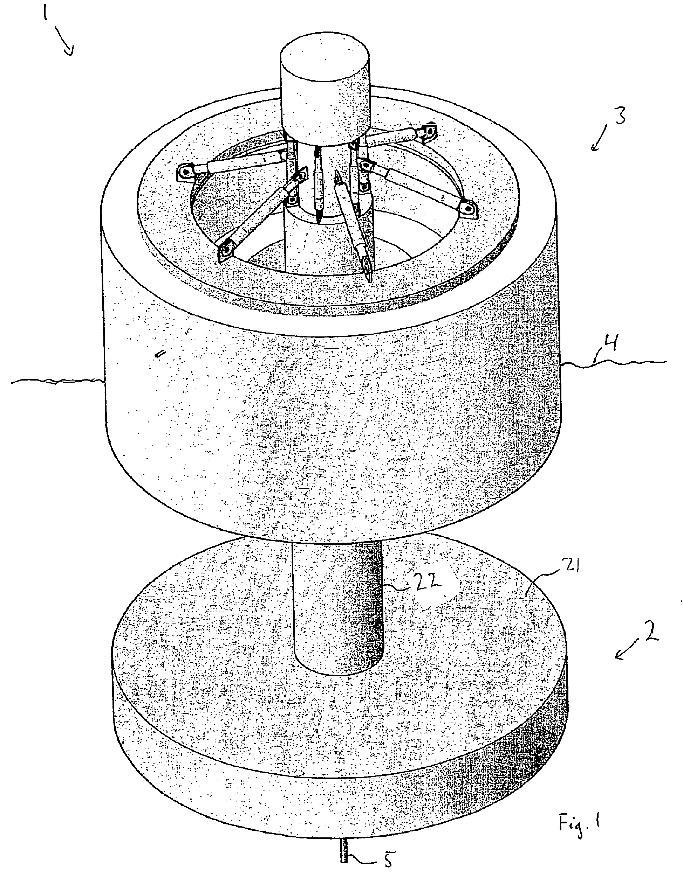

The wave energy generation system 1 is located floating in sea, where the water level 4 under normal operating conditions is indicated in fig. 1. The base structure 2 has small, but positive buoyancy in water. The base structure 2 is for example anchored to the sea bed by means of anchoring means (not shown), hence the vertical movement of the base structure 2 is limited up to a certain load. The anchoring means will allow some vertical movement of the base structure to avoid damages to the system in situations with extreme weather conditions.

The base structure 2 comprises a substantially flat, cylindrical body 21 and a post 22 protruding upwardly from the flat, cylindrical body 21. The post 22 comprises a central, longitudinal channel 23 from its top down through the cylindrical body 21, allowing for an electric cable 5 to be provided inside the post. The electric cable 5 is transferring electric energy generated by the system 1 to an energy distribution system and further to a load. The cylindrical body 21 is anchored or connected to the seabed by a wire system, a chain system, rope system or hinged rod system or combinations thereof, and will be secured to the seabed by means of a pile system, suction anchor, anchor or clump weight system or a combination of these to avoid fixed distance between the seabed and the wave energy system. This is desirable in situations with extreme weather, to avoid damages to the system.

In the top end of the post 22, a substantially cylindrical opening 24 is provided. A connection device 40 is provided in the cylindrical opening 24, for connection of the base structure 2 to the floating structure 3.

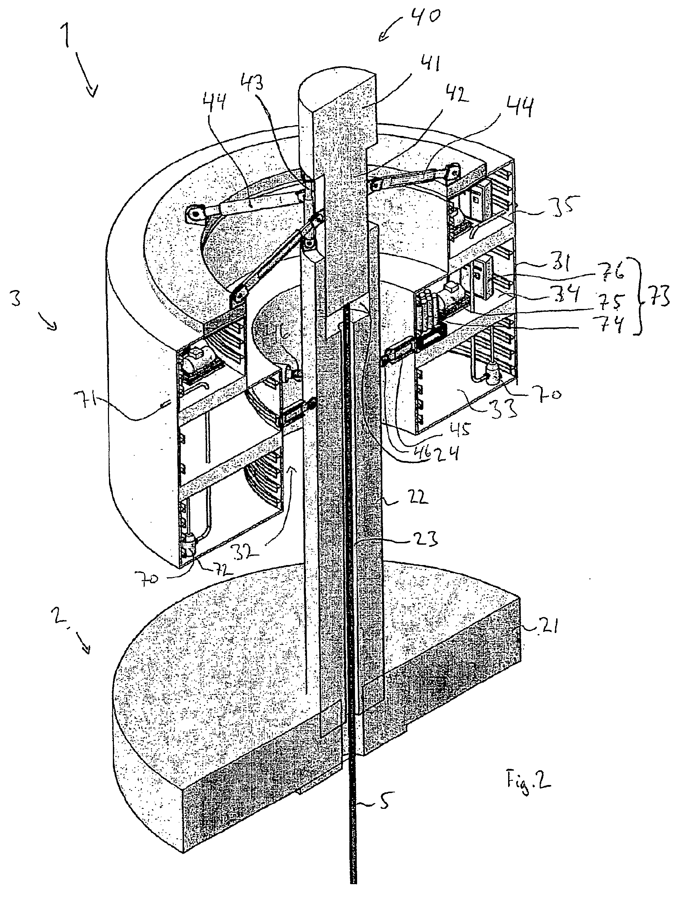

The connection device 40 is substantially T-shaped in a vertical cross section, having a cylindrical head 41 and a cylindrical piston element 42 protruding downwardly from the head 41. The piston element 42 is adapted to move in a vertical direction up and down inside the opening 24. The vertical movement of the connection device 40 is controlled and/or restricted by vertical hydraulic cylinder devices 43 provided between the upper end of the post 22 and the lower end of the head 41, as shown in fig. 2. The vertical hydraulic cylinder devices 43 can be used to adjust the floating structure 3 in relation to tides, wave height etc, however, during normal operation, they will not move.

The connection device 40 is connecting the base structure 2 and the floating structure 3 by means of primary hydraulic cylinder devices 44, which will be described in detail below.

The floating structure 3 comprises a substantially hollow cylindrical housing 31 with a central opening 32 wherein the pole 22 of the base structure 2 is provided. The housing 31 comprises several compartments; a lower compartment 33, an intermediate compartment 34 and an upper compartment 35.

A first end of the primary hydraulic cylinder devices 44 is rotatably fastened to the upper end of the housing 31, while a second end of the primary hydraulic cylinder devices 44 is rotatably fastened to the connection device 40, as shown in fig. 2. It should be noted that the second end of the primary hydraulic cylinder devices 44 is not obstructing the vertical movement of the connection device 40.

Moreover, secondary hydraulic cylinder devices 45 are provided as distance elements in the central opening 32 of the housing 31. It should be noted that first ends of the secondary hydraulic cylinder devices 45 are fixed to the central opening 32 of the housing 31, while second ends of the secondary hydraulic cylinder devices 45 are slidable along the outer surface of the post 22. The second end of the secondary hydraulic cylinder devices 45 can for example comprise a sliding element or a roller element, to reduce the friction towards the post 22. In fig. 2 it is shown that the second end of the secondary hydraulic cylinder devices 45 comprises a rotating sliding wheel 46 that rotates on the surface of the post 22 when the floating structure 3 moves in relation to the base structure 2. It is also shown that the angle between the secondary hydraulic cylinder devices 45 and the surface of the central opening 32 is substantially 90°.

It should be noted that the secondary cylinder devices 45 provides some flexibility with respect to relative horizontal movement between the floating structure and the base structure. During normal operation, these cylinder devices 45 will be so stiff that no movements occur. Hence, the secondary devices 45 could be replaced with other types of distance elements of fixed length. However, in situations with extreme weather, the flexibility provided by the secondary cylinder devices 45 could prevent the system from being damaged.

The housing 31 will now be further described. The lower compartment 33 is a compartment that may be filled with water when necessary to adjust the floating structure 3 in relation to tides, wave height, wave period, etc. As shown in fig. 2, the lower compartment 33 comprises bidirectional pumps 70 for pumping water into or out from the lower compartment 33 through an upper opening 71 and a lower opening 72. The upper opening 71 is located on the outside periphery of the housing 31, at a distance approximately 3/4 of the height of the housing 31 from the bottom of the housing 31. The lower opening 72 is located on the underside of the housing 31.

The intermediate compartment 34 and the upper compartment 35 comprise the different elements of an energy converting device 73. The energy converting device 73 converts hydraulic energy, i.e. energy from flowing hydraulic fluid to electric energy.

The energy converting device 73 comprises a hydraulic accumulator device 74 that is hydraulically connected to the primary and secondary hydraulic cylinder devices 44, 45 by means of tubes/pipes etc (not shown). Also the vertical hydraulic cylinder devices 43 can be hydraulically connected to the hydraulic accumulator device 74. When the hydraulic cylinder devices 44, 45 retract or expand because of the relative movement between the floating structure 3 and the base structure 2, hydraulic fluid is flowing into or out from the hydraulic accumulator device 74. The hydraulic accumulator device 74 is connected to the generator device 75, so that the hydraulic flow caused by the said relative movement, causes the generator device 74 to generate electric energy from the hydraulic flow. The generator device 74 is electrically connected to the electric circuitry 76, where the electric power is converted to a suitable voltage/current level for transfer to the above-mentioned energy distribution system and load via the cable 5.

The hydraulic accumulator device 74, the generator device 75 and the electric circuitry 76 are considered to be elements familiar to a skilled person of the art, and will not be described in detail herein. The hydraulic energy that is generated can for example be converted to a 50/60 Hz AC voltage with a voltage level of for example 380 - 440 V, this can however vary from application to application based on different parameters (size and number of nearby wave energy generation system units, distance to load, type and parameters of distribution network etc).

Moreover, a control system is provided for controlling the operation of the wave energy generation system 1. The control system comprises sensing means to measure for example height, length and frequency of waves, weather conditions etc, pressure sensing means to monitor the pressure of the hydraulic system, and also pumping devices for pumping hydraulic fluid into or out from the hydraulic cylinder devices and to control the counter pressure in them to limit their freedom of movement, i.e. to control their "stiffness".

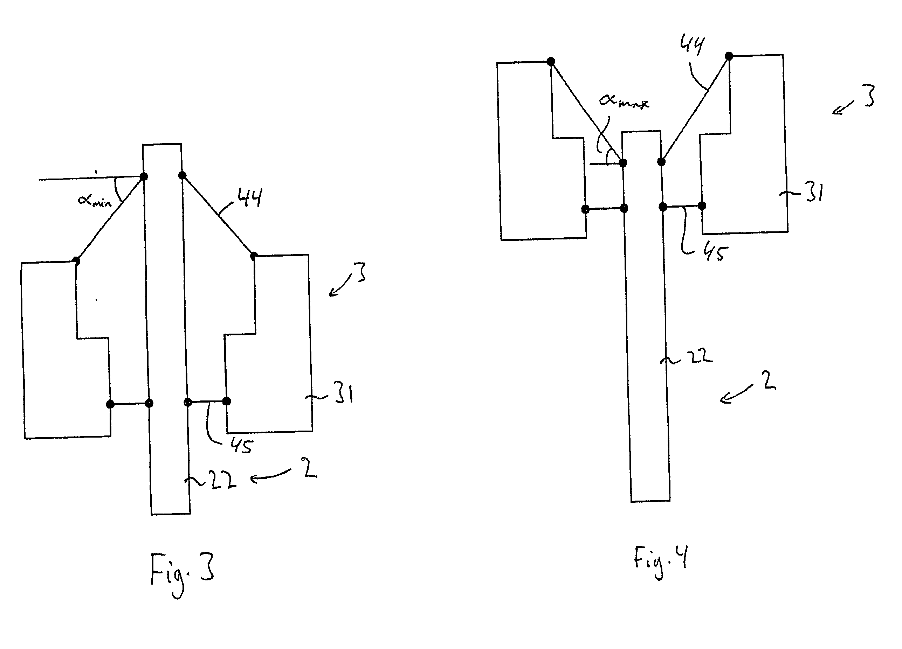

Fig. 3 illustrates the floating structure 3 in the lowermost position in relation to the base structure 2. As shown, the primary hydraulic cylinder device 44 is oriented with an angle αₘᵢₙ. The angle αₘᵢₙ can for example be down to -60° in relation to a horizontal line.

Fig. 4 illustrates the floating structure 3 in the uppermost position in relation to the base structure 2. As shown, the primary hydraulic cylinder device 44 is oriented with an angle αₘₐₓ. The angle αₘₐₓ can for example be up to 60° in relation to a horizontal line.

Consequently, hydraulic fluid is forced between the primary cylinder devices 44 and the hydraulic accumulator device 74 when the floating structure 3 is forced between the positions shown in fig. 3 and 4 respectively. Hence, electric energy is produced by the generator device 75.

To avoid the risk of damages, the hydraulic cylinder devices, and especially the primary hydraulic cylinder device 44, should not be allowed to move to their maximal (extended) or minimal (retracted) positions. This task is performed by the control system, which controls the counter pressure in the cylinder devices by means of the hydraulic accumulator device 74.

The control system can provide that the primary hydraulic cylinder devices 44 are stiffer when forced upwardly by the waves than when moving downwards (because of gravitational force).

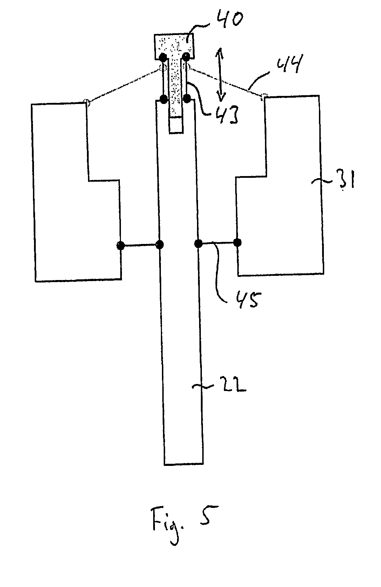

It is now referred to fig. 5, illustrating the vertical movement of the connection device 40 in relation to the post 22. In one aspect of the invention, the hydraulic cylinder devices 43 are used to adjust the height of the floating structure 3 in relation to the sea level, to optimise the position of the floating structure 3 with respect to tidal variations. Here, the height of the connection device 40 is adjusted by means of the control system for example periodically (for example every 30 minutes, every 2 hours etc), based on a measured average sea level, a tidal table or similar.

In another aspect of the invention, also the connection device 40 is moving within its boundaries set by the vertical hydraulic cylinder devices 43 according to waves. Here, also the vertical hydraulic cylinder devices 43 are contributing to energy production.

As mentioned above, the control system controls the wave energy generation system 1. One important task for the control system is to optimise the energy production of the system 1, by optimizing the wave energy absorption. This can be performed by adjusting freedom of movement for the floating structure (i.e. limit the extreme values for the hydraulic cylinder devices) or pumping seawater into or out from the lower compartment. As known, it would be optimal to move the floating structure up and down at the natural or resonant frequency of the waves, hence the control system would be optimize for such performance.

Consequently, the control system will actively seek the configuration of weight (buoyancy) and angles that can extract most energy out from the sea state conditions. The control system comprises sensors to sense weather conditions, for example such as wind, wave frequency, wave periods etc. Another important task for the control system is to protect the system 1 with respect to bad weather which may damage the structures. This can be performed by filling the lower compartment with seawater, and hence submerge the floating structure and the base structure partially or completely into the sea.

Moreover, it would also be possible to stop the system remotely, to avoid vertical movement when there is a need for maintenance etc. For example, fluid can be pumped out from the lower compartment, and the floating structure 3 will float up and hence be easily available for maintenance etc.

### Alternative embodiments

In an alternative embodiment, the base structure 2 is fixed to the seabed. This is of special interest in shallower waters. In yet alternative embodiments, the base structure is anchored to the sea bed by means of wires or chains to suction anchors, pile systems or a clump weight system.

In alternative embodiments, the secondary cylinder devices 45 could be provided as several rows of cylinders, where the rows are mounted spaced apart in a vertical direction. Alternatively, the secondary cylinder devices 45 could be fixed to the post 22 while the rollers are slidable along the inner surface of the opening 32.

According to the invention, it is provided a robust and reliable wave energy generation system, where it can be prevented that the hydraulic cylinders reach their maximum retracted and/or expanded positions, thereby reducing the risk for damages to the system. Moreover, substantially all movable parts are located or can be elevated above the sea level for access with respect to maintenance, replacements of parts and components if necessary etc.

The abovementioned detailed description is especially provided to illustrate and to describe preferred embodiments of the invention. However, the description is by no means limiting the invention to the specific embodiments.

## Claims

1. Wave energy generation system for generating electric energy from waves, comprising a base structure (2) and a floating structure (3), where the floating structure is movable in relation to the base structure when influenced by waves, wherein:
- the base structure (2) is anchored to the sea bed and comprises a substantially vertical post (22);
- the floating structure (3) comprises a housing (31) with a central opening (32), where the floating structure (3) is provided substantially around the vertical post (22);
- the floating structure (3) is movably connected to the post (22) by means of primary hydraulic cylinder devices (44), where the primary hydraulic cylinder devices (44) are hydraulically connected to an energy converting device (73) for converting hydraulic energy in the fluid flow caused by wave movements to electric energy;
**characterized in that**
- secondary hydraulic cylinder devices (45) are provided in the central opening (32) between the post (22) and the housing (31) to maintain a distance between the housing (31) and the post (22), where the secondary cylinder devices (45) provides flexibility with respect to relative horizontal movement between the floating structure (3) and the base structure (2) to prevent the system from being damaged in situations with extreme weather.

2. System according to claim 1, where the base structure comprises a substantially flat, cylindrical body (21), where the post (22) is protruding upwardly from the body (21).

3. System according to claim 2, where the base structure comprises a longitudinal channel (23) for an electric cable (5) electrically connected to the energy converting device (73).

4. System according to claim 1, where the floating structure (3) comprises a lower compartment (33) wherein bidirectional pumps (70) are provided for pumping seawater into or out from the lower compartment for ballasting the floating structure (3).

5. System according to claim 1, where the primary hydraulic cylinder devices (44) are connected to the base structure (2) by means of a connection device (40) provided in the top end of the post (22).

6. System according to claim 5, where the connection device (40) is vertically movable in relation to the top end of the post (22) by means of vertical hydraulic cylinder devices (43).

7. System according to claim 1, where the energy converting device (73) comprises a hydraulic accumulator device (74) for accumulating hydraulic fluid, a generator device (75) for generating electric energy from the flowing hydraulic fluid and electric circuitry (76) electrically connected to the generator device (75), where the electric energy is converted to a suitable voltage/current level for transfer to a distribution system or load.

8. System according to claim 7, where the electric circuitry (76) is connected to an electric cable (5).

9. System according to claim 7, where the hydraulic accumulator device (74) is hydraulically connected to the primary hydraulic cylinder devices (44), secondary hydraulic cylinder devices (45) and/or the vertical hydraulic cylinder devices (43).

10. System according to claim 7, where the energy converting device (73) is provided in upper and/or intermediate compartments of the floating structure (3).

11. System according to claim 1, further comprising a control system for controlling the operation of the system (1) according to weather conditions, security requirements etc.

12. System according to claim 11, where the control system controls the hydraulic counter pressure in the primary hydraulic cylinder devices (44), secondary hydraulic cylinder devices (45) and/or the vertical hydraulic cylinder devices (43) to prevent that the they reach their maximum retracted and/or expanded positions.

13. System according to claim 1, where the housing (31) is substantially cylindrical.

14. System according to claim 1, where the primary hydraulic cylinder device (44) is oriented with an angle αₘᵢₙ down to -60° and an angle αₘₐₓ up to 60° in relation to a horizontal line.

## Patentansprüche

1. Wellenenergieerzeugungssystem zum Erzeugen elektrischer Energie aus Wellen, einen Sockelaufbau (2) und einen schwimmenden Aufbau (3) umfassend, wobei der schwimmende Aufbau bei Beeinflussung durch Wellen in Bezug auf den Grundaufbau beweglich ist, wobei:
- der Sockelaufbau (2) auf dem Meeresboden verankert ist und einen im Wesentlichen vertikalen Ständer (22) aufweist;
- der schwimmende Aufbau (3) ein Gehäuse (31) mit einer zentralen Öffnung (32) aufweist, wobei der schwimmende Aufbau (3) im Wesentlichen um den vertikalen Ständer (22) herum vorgesehen ist;
- der schwimmende Aufbau (3) mittels primärer Hydraulikzylindereinrichtungen (44) beweglich an den Ständer (22) angeschlossen ist, wobei die primären Hydraulikzylindereinrichtungen (44) hydraulisch an eine Energieumwandlungsvorrichtung (73) angeschlossen sind, um durch Wellenbewegungen im Flüssigkeitsstrom bewirkte hydraulische Energie in elektrische Energie umzuwandeln;
**dadurch gekennzeichnet, dass**
- sekundäre Hydraulikzylindereinrichtungen (45) in der zentralen Öffnung (32) zwischen dem Ständer (22) und dem Gehäuse (31) vorgesehen sind, um einen Abstand zwischen dem Gehäuse (31) und dem Ständer (22) aufrechtzuerhalten, wobei die sekundären Hydraulikzylindereinrichtungen (45) für Flexibilität im Hinblick auf eine relative Horizontalbewegung zwischen dem schwimmenden Aufbau (3) und dem Sockelaufbau (2) sorgen, um zu verhindern, dass das System in Situationen mit extremem Wetter beschädigt wird.

2. System nach Anspruch 1, wobei der Sockelaufbau einen im Wesentlichen flachen, zylindrischen Körper (21) aufweist, wobei der Ständer (22) aus dem Körper (21) nach oben vorsteht.

3. System nach Anspruch 2, wobei der Sockelaufbau einen Längskanal (23) für ein elektrisch an die Energieumwandlungsvorrichtung (73) angeschlossenes Elektrokabel (5) aufweist.

4. System nach Anspruch 1, wobei der schwimmende Aufbau (3) ein unteres Abteil (33) aufweist, wobei bidirektionale Pumpen (70) vorgesehen sind, um Meereswasser in das oder aus dem unteren Abteil zur Ballasteinstellung der schwimmenden Struktur (3) zu pumpen.

5. System nach Anspruch 1, wobei die primären Hydraulikzylindereinrichtungen (44) mittels einer im oberen Ende des Ständers (22) vorgesehenen Anschlussvorrichtung (40) an den Sockelaufbau (2) angeschlossen sind.

6. System nach Anspruch 5, wobei die Anschlussvorrichtung (40) mittels vertikaler Hydraulikzylindereinrichtungen (43) in Bezug auf das obere Ende des Ständers (22) vertikal beweglich ist.

7. System nach Anspruch 1, wobei die Energieumwandlungsvorrichtung (73) eine Hydraulikspeichervorrichtung (74) zum Speichern von Hydraulikflüssigkeit, eine Generatorvorrichtung (75) zum Erzeugen von elektrischer Energie aus der strömenden Hydraulikflüssigkeit und einen elektrischen Schaltkreis (76) umfasst, der elektrisch an die Generatorvorrichtung (75) angeschlossen ist, wobei die elektrische Energie in einen geeigneten Spannungs-/Strompegel zur Übertragung an ein Verteilungssystem oder einen Abnehmer umgewandelt wird.

8. System nach Anspruch 7, wobei der elektrische Schaltkreis (76) an ein Elektrokabel (5) angeschlossen ist.

9. System nach Anspruch 7, wobei die Hydraulikspeichervorrichtung (74) hydraulisch an die primären Hydraulikzylindereinrichtungen (44), die sekundären Hydraulikzylindereinrichtungen (45) und/oder die vertikalen Hydraulikzylindereinrichtungen (43) angeschlossen ist.

10. System nach Anspruch 7, wobei die Energieumwandlungsvorrichtung (73) in oberen und/oder Zwischenabteilen des schwimmenden Aufbaus (3) vorgesehen ist.

11. System nach Anspruch 1, darüber hinaus ein Steuersystem zum Steuern des Betriebs des Systems (1) entsprechend Wetterbedingungen, Sicherheitserfordernissen, etc. umfassend.

12. System nach Anspruch 11, wobei das Steuersystem den hydraulischen Gegendruck in den primären Hydraulikzylindereinrichtungen (44), den sekundären Hydraulikzylindereinrichtungen (45) und/oder den vertikalen Hydraulikzylindereinrichtungen (43) steuert, um zu verhindern, dass sie ihre maximal ein- oder ausgefahrenen Positionen erreichen.

13. System nach Anspruch 1, wobei das Gehäuse (31) im Wesentlichen zylindrisch ist.

14. System nach Anspruch 1, wobei die primäre Hydraulikzylindereinrichtung (44) mit einem Winkel αₘᵢₙ nach unten bis -60° und einem Winkel αₘₐₓ nach oben bis 60° in Bezug auf eine horizontale Linie ausgerichtet ist.

## Revendications

1. Système de génération d'énergie par les vagues, destiné à générer une énergie électrique à partir de la houle, comprenant une structure de base (2) et une structure flottante (3), dans lequel la structure flottante est mobile par rapport à la structure de base quand elle est influencée par les vagues, dans lequel :
- la structure de base (2) est ancrée au fond de la mer et comprend un montant essentiellement vertical (22) ;
- la structure flottante (3) comprend un logement (31) avec une ouverture centrale (32), dans lequel la structure flottante (3) est disposée essentiellement autour du montant vertical (22) ;
- la structure flottante (3) est connectée de manière mobile au montant (22) à l'aide de dispositifs à vérins hydrauliques primaires (44), dans lequel les dispositifs à vérins hydrauliques primaires (44) sont connectés de manière hydraulique à un dispositif de conversion d'énergie (73) destiné à convertir l'énergie hydraulique présente dans le flux de fluide provoqué par le mouvement des vagues, en une énergie électrique ;
**caractérisé en ce que** :
- des dispositifs à vérins hydrauliques secondaires (45) sont disposés dans l'ouverture centrale (32) entre le montant (22) et le logement (31) de façon à maintenir une certaine distance entre le logement (31) et le montant (22), dans lequel les dispositifs à vérins hydrauliques secondaires (45) fournissent une flexibilité en ce qui concerne un déplacement horizontal relatif entre la structure flottante (3) et la structure de base (2) de façon à empêcher le système de subir des dommages dans des situations de conditions météorologiques extrêmes.

2. Système selon la revendication 1, dans lequel la structure de base comprend un corps cylindrique essentiellement plat (21), dans lequel le montant (22) fait saillie vers le haut à partir du corps (21).

3. Système selon la revendication 2, dans lequel la structure de base comprend un canal longitudinal (23) pour un câble électrique (5) connecté de manière électrique au dispositif de conversion d'énergie (73).

4. Système selon la revendication 1, dans lequel la structure flottante (3) comprend un compartiment inférieur (33) dans lequel des pompes bidirectionnelles (70) sont prévues de façon à pomper l'eau de mer dans le, ou hors du, compartiment inférieur afin permettre un ballastage de la structure flottante (3).

5. Système selon la revendication 1, dans lequel les dispositifs à vérins hydrauliques primaires (44) sont connectés à la structure de base (2) à l'aide d'un dispositif de connexion (40) disposé dans l'extrémité supérieure du montant (22).

6. Système selon la revendication 5, dans lequel le dispositif de connexion (40) est mobile de manière verticale par rapport à l'extrémité supérieure du montant (22) à l'aide de dispositifs à vérins hydrauliques verticaux (43).

7. Système selon la revendication 1, dans lequel le dispositif de conversion d'énergie (73) comprend un dispositif d'accumulation hydraulique (74) destiné à accumuler un fluide hydraulique, un dispositif générateur (75) destiné à générer de l'énergie électrique à partir du flux de fluide hydraulique, et des circuits électriques (76) connectés de manière électrique au dispositif générateur (75), dans lequel l'énergie électrique est convertie en un niveau de tension / de courant approprié à son transfert vers un système de distribution ou vers une charge.

8. Système selon la revendication 7, dans lequel les circuits électriques (76) sont connectés à un câble électrique (5).

9. Système selon la revendication 7, dans lequel le dispositif d'accumulation hydraulique (74) est connecté de manière hydraulique aux dispositifs à vérins hydrauliques primaires (44), aux dispositifs à vérins hydrauliques secondaires (45) et / ou aux dispositifs à vérins hydrauliques verticaux (43).

10. Système selon la revendication 7, dans lequel le dispositif de conversion d'énergie (73) est disposé dans des compartiments supérieurs et / ou intermédiaires de la structure flottante (3).

11. Système selon la revendication 1, comprenant en outre un système de commande destiné à commander l'exploitation du système (1) selon les conditions météorologiques, les exigences en matière de sécurité, etc.

12. Système selon la revendication 11, dans lequel le système de commande commande la contre-pression hydraulique dans les dispositifs à vérins hydrauliques primaires (44), les dispositifs à vérins hydrauliques secondaires (45) et / ou les dispositifs à vérins hydrauliques verticaux (43), de façon à empêcher qu'ils n'atteignent leurs positions maximum rentrées et / ou déployées.

13. Système selon la revendication 1, dans lequel le logement (31) est essentiellement cylindrique.

14. Système selon la revendication 1, dans lequel les dispositifs à vérins hydrauliques primaires (44) sont orientés selon un angle αₘᵢₙ qui peut descendre jusqu'à - 60°, et un angle αₘₐₓ qui peut monter jusqu'à 60° par rapport à une ligne horizontale.
